# EUROPEAN PATENT APPLICATION

(11) **EP 3 070 579 A2**
(43) Date of publication of application: **21.09.2016**
(21) Application number: 16161374.0
(22) Date of filing: 21.03.2016
(51) Int. Cl.: G06F 3/01

(54) **ELECTRONIC DEVICE INCLUDING TOUCH PANEL AND METHOD FOR CONTROLLING THE SAME**

(30) Priority: 19.03.2015 KR 20150038486
(71) Applicant: Samsung Electronics Co., Ltd., Gyeonggi-do 16677 (KR)
(72) Inventor: CHUNG, Gih-Sung, 16677 Suwon-si (KR); PARK, Sung-Chul, 16677 Suwon-si (KR); CHEONG, Cheol-Ho, 16677 Suwon-si (KR); KIM, So-Young, 16677 Suwon-si (KR); KIM, Sook-Jin, 16677 Suwon-si (KR); SONG, Moon-Bae, 16677 Suwon-si (KR); LEE, Seung-Eun, 16677 Suwon-si (KR); JUNG, Sun-Ok, 16677 Suwon-si (KR); CHO, Ik-Hwan, 16677 Suwon-si (KR); CHO, Joon-Ho, 16677 Suwon-si (KR); CHUN, Jae-Woong, 16677 Suwon-si (KR)
(74) Representative: Nederlandsch Octrooibureau

(57) **Abstract**

An electronic device is provided and includes a touch panel including a plurality of electrodes and a processor configured to obtain a measurement signal measured at each electrode of the plurality of electrodes and determine adherence information of the electronic device based on the measurement signal.

## Description

### BACKGROUND

### 1. Field of the Disclosure

The present disclosure relates generally to an electronic device including a touch panel and a method for controlling the same, and more particularly, to an electronic device using a measurement signal measured on a touch panel of the electronic device and a method for controlling the same.

### 2. Description of the Related Art

Wearable electronic devices are electronic devices that a user can wear on the body. By wearing a wearable electronic device on the body, the user may be readily provided with information output from the wearable electronic device.

The wearable electronic device may include a sensor that is capable of measuring a biological signal from a user's body. The sensor may measure a biological signal such as, for example, heart rate or oxygen saturation. The wearable electronic device may output information related to the user's body by processing and analyzing the measured biological signal. The user may identify his/her physical condition by determining the body-related information from the wearable electronic device.

As described above, an electronic device may measure a biological signal using a sensor. In order for the electronic device to measure the biological signal more adequately, the sensor needs to be in adherence to a measurement target. In a case where the electronic device is not worn in adherence to the measurement target, the electronic device may not provide a valid user's body condition since the electronic device cannot measure the biological signal adequately.

### SUMMARY

The present disclosure has been made to address at least the disadvantages described above and to provide at least the advantages described below.

An aspect of the present disclosure is to provide an electronic device for determining adherence information based on a signal measured on a touch panel and a method for controlling the same.

In accordance with an aspect of the present disclosure, there is provided an electronic device that includes a touch panel including a plurality of electrodes, and a processor configured to obtain a measurement signal measured at each electrode of the plurality of electrodes, and determine adherence information of the electronic device based on the measurement signal.

In accordance with another aspect of the present disclosure, there is provided a method for controlling an electronic device comprising a touch panel including a plurality of electrodes. The method includes obtaining a measurement signal measured at each electrode of the plurality of electrodes and determining adherence information of the electronic device based on the measurement signal.

In accordance with another aspect of the present disclosure, there is provided an electronic device that includes a main body including a touch screen panel disposed on a front surface thereof, a touch panel disposed on a back surface of the main body and including a plurality of electrodes, and a processor configured to determine adherence information of the electronic device based on a measurement signal measured at each electrode of the plurality of electrodes and determine a touch point at which a touch is made on the touch screen panel based on a signal measured on the touch screen panel.

Other aspects, advantages, and salient features of the disclosure will become apparent to those skilled in the art from the following detailed description, which, taken in conjunction with the annexed drawings, discloses embodiments of the disclosure.

### BRIEF DESCRIPTION OF THE DRAWINGS

The above and other aspects, features and advantages of certain embodiments of the present disclosure will be more apparent from the following description taken in conjunction with the accompanying drawings, in which:
FIG. 1 is a block diagram illustrating a network environment including an electronic device, according to an embodiment of the present disclosure;
FIG. 2 is a flowchart illustrating a control method of an electronic device, according to an embodiment of the present disclosure;
FIG. 3 is a flowchart illustrating a control method of an electronic device, according to an embodiment of the present disclosure;
FIG. 4A is a schematic view of a touch panel, according to an embodiment of the present disclosure;
FIG. 4B is a perspective view of the touch panel shown in FIG. 4A, according to an embodiment of the present disclosure;
FIGs. 5A-5C are diagrams illustrating a change in strength of a measurement signal based on a distance between an electrode and a measurement target, according to an embodiment of the present disclosure;
FIG. 6 is a schematic view of nodes set by electrodes, according to an embodiment of the present disclosure;
FIG. 7 is a flowchart illustrating a control method of an electronic device, according to an embodiment of the present disclosure;
FIG. 8 is a flowchart illustrating a control method of an electronic device, according to an embodiment of the present disclosure;
FIG. 9 is a side view of an electronic device, according to an embodiment of the present disclosure;
FIG. 10 is a flowchart illustrating a control method of an electronic device, according to an embodiment of the present disclosure;
FIGs. 11A and 11B are diagrams illustrating a relationship between a degree of skin hydration and strength of a measurement signal, according to an embodiment of the present disclosure;
FIG. 12 is a flowchart illustrating a control method of an electronic device, according to an embodiment of the present disclosure;
FIG. 13 is a perspective view of an electronic device, according to an embodiment of the present disclosure;
FIG. 14 is a flowchart illustrating a control method of an electronic device, according to an embodiment s of the present disclosure;
FIG. 15 is a flowchart illustrating a control method of an electronic device, according to an embodiment of the present disclosure;
FIG. 16A is a diagram of an electronic device, according to an embodiment of the present disclosure;
FIG. 16B is a perspective view of an electronic device, according to an embodiment of the present disclosure;
FIG. 16C is a perspective view illustrating a configuration of an electronic device, according to an embodiment of the present disclosure;
FIG. 17 is a flowchart illustrating a control method of an electronic device, according to an embodiment of the present disclosure;
FIG. 18 is a flowchart illustrating a control method of an electronic device, according to an embodiment of the present disclosure;
FIG. 19 is a diagram illustrating a contact shape and its contact information, according to an embodiment of the present disclosure;
FIG. 20 is a diagram illustrating contact shapes for worn portions, according to an embodiment of the present disclosure;
FIG. 21 is a perspective view of an electronic device, according to an embodiment of the present disclosure;
FIGs. 22A-22C are diagrams illustrating of pad-type electronic devices, according to an embodiment of the present disclosure; and
FIG. 23 is a diagram of an electronic device, according to an embodiment of the present disclosure.

Throughout the drawings, like reference numerals will be understood to refer to like parts, components, and structures.

### DETAILED DESCRIPTION

Hereinafter, various embodiments of the present disclosure will be disclosed with reference to the accompanying drawings. However, the present disclosure is not intended to limit the present disclosure to particular embodiments, and it should be construed as including various modifications, equivalents, and/or alternatives according to the embodiments of the present disclosure. In regard to the description of the drawings, like reference numerals refer to like elements.

The terms "have," "may have," "include," and "may include" as used herein indicate the presence of corresponding features (for example, elements such as numerical values, functions, operations, or parts), and do not preclude the presence of additional features.

The terms "A or B," "at least one of A or/and B," or "one or more of A or/and B" as used herein include all possible combinations of items enumerated with them. For example, "A or B," "at least one of A and B," or "at least one of A or B" means (1) including at least one A, (2) including at least one B, or (3) including both at least one A and at least one B.

The terms such as "first" and "second" as used herein may modify various elements regardless of an order and/or importance of the corresponding elements, and do not limit the corresponding elements. These terms may be used for the purpose of distinguishing one element from another element. For example, a first user device and a second user device may indicate different user devices regardless of the order or importance. For example, a first element may be referred to as a second element without departing from the scope the present invention, and similarly, a second element may be referred to as a first element.

It will be understood that, when an element (for example, a first element) is "(operatively or communicatively) coupled with/to" or "connected to" another element (for example, a second element), the element may be directly coupled with/to another element, and there may be an intervening element (for example, a third element) between the element and another element. To the contrary, it will be understood that, when an element (for example, a first element) is "directly coupled with/to" or "directly connected to" another element (for example, a second element), there is no intervening element (for example, a third element) between the element and another element.

The expression "configured to (or set to)" as used herein may be used interchangeably with "suitable for," "having the capacity to," "designed to," " adapted to," "made to," or "capable of" according to a context. The term "configured to (set to)" does not necessarily mean "specifically designed to" in a hardware level. Instead, the expression "apparatus configured to..." may mean that the apparatus is "capable of..." along with other devices or parts in a certain context. For example, "a processor configured to (set to) perform A, B, and C" may mean a dedicated processor (e.g., an embedded processor) for performing a corresponding operation, or a generic-purpose processor (e.g., a CPU or an application processor) capable of performing a corresponding operation by executing one or more software programs stored in a memory device.

The terms used in describing the various embodiments of the present disclosure are for the purpose of describing particular embodiments and are not intended to limit the present disclosure. As used herein, singular forms are intended to include plural forms as well, unless the context clearly indicates otherwise. All of the terms used herein, including technical or scientific terms, have the same meanings as those generally understood by an ordinary skilled person in the related art unless they are defined otherwise. The terms defined in a generally used dictionary should be interpreted as having the same or similar meanings as the contextual meanings of the relevant technology and should not be interpreted as having ideal or exaggerated meanings unless they are clearly defined herein. According to circumstances, even the terms defined in this disclosure should not be interpreted as excluding the embodiments of the present disclosure.

The term 'module' as used herein may refer to a unit that includes, for example, one or a combination of hardware, software or firmware. The term 'module' may be interchangeably used with terms such as, for example, unit, logic, logical block, component, or circuit. The 'module' may be the minimum unit of an integrally constructed part, or a part thereof. The 'module' may be the minimum unit for performing one or more functions, or a part thereof. The 'module' may be implemented mechanically or electronically. For example, the 'module' may include at least one of an application-specific integrated circuit (ASIC) chip, field-programmable gate arrays (FPGAs), or a programmable-logic device, which are known or will be developed in the future, and which perform certain operations.

An electronic device according to embodiments of the present disclosure may include at least one of, for example, a smart phone, a tablet personal computer (PC), a mobile phone, a video phone, an e-book reader, a desktop PC, a laptop PC, a netbook computer, a workstation, a server, a personal digital assistant (PDA), a portable multimedia player (PMP), an MP3 player, a mobile medical device, a camera, or a wearable device (e.g., smart glasses, a head mounted device (HMD), electronic clothing, an electronic bracelet, an electronic necklace, an electronic App accessory (or appcessory), electronic tattoo, a smart mirror, or a smart watch.).

The electronic device may be a smart home appliance. The smart home appliance may include at least one of, for example, a television (TV), a digital video disk (DVD) player, an audio player, a refrigerator, an air conditioner, a cleaner, an oven, a microwave oven, a washer, an air purifier, a set-top box, a home automation control panel, a security control panel, a TV box (e.g., a Samsung HomeSync™, an Apple TV™, or a Google TV™), a game console (e.g., Xbox™ or PlayStation™), an electronic dictionary, an electronic key, a camcorder or a digital photo frame.

The electronic device may include at least one of various medical devices (e.g., various portable medical monitors (e.g., a blood glucose monitors, a heart rate monitors, a blood pressure monitors, a temperature monitors or the like), magnetic resonance angiography (MRA), magnetic resonance imaging (MRI), computed tomography (CT), a medical camcorder, an ultrasonic device or the like), a navigation device, a global positioning system (GPS) receiver, an event data recorder (EDR), a flight data recorder (FDR), an automotive infotainment device, a marine electronic device (e.g., a marine navigation device, a gyro compass or the like), avionics, a security device, a car head unit, an industrial or household robot, an automatic teller machine (ATM) for banks, a point of sales (POS) device for shops, or an Internet of Things (IoT) device (e.g., an electric bulb, various sensors, an electricity or gas meter, a sprinkler device, a fire alarm, a thermostat, a streetlamp, a toaster, fitness equipment, a hot water tank, a heater, a boiler and the like).

The electronic device may further include at least one of a part of the furniture or building/structure, an electronic board, an electronic signature receiving device, a projector, or various meters (e.g., meters for water, electricity, gas or radio waves). The electronic device may be one or a combination of the above-described devices. An electronic device may be a flexible electronic device. Further, an electronic device is not be limited to the above-described devices, and may include a new electronic device according to the development of new technologies.

Now, an electronic device according to an embodiment of the present disclosure will be described with reference to the accompanying drawings. As used herein, the term 'user' may refer to a person who uses the electronic device, or a device (e.g., an artificial intelligence electronic device) that uses the electronic device.

As used herein, the term 'wearing' or 'adherence' may refer to a state in which a contact has occurred between a plurality of objects (e.g., between an electronic device and a measurement target). Further, the term 'adherence' or 'degree of adherence' as used herein may refer to strength or intensity of a contact that has occurred between a plurality of objects, and the adherence or the degree of adherence may be quantified by specific properties (e.g., contact area or contact pressure). Moreover, the term 'optimal/proper contact' or 'optimal/proper adherence' as used herein may refer to a case where the adherence or the degree of adherence between a plurality of objects belongs to a predetermined range, or is greater than or equal to a predetermined degree, and this case may correspond to a case where when the adherence or the degree of adherence is quantified by the specific properties, the properties have reached a reference value or are greater than the reference value.

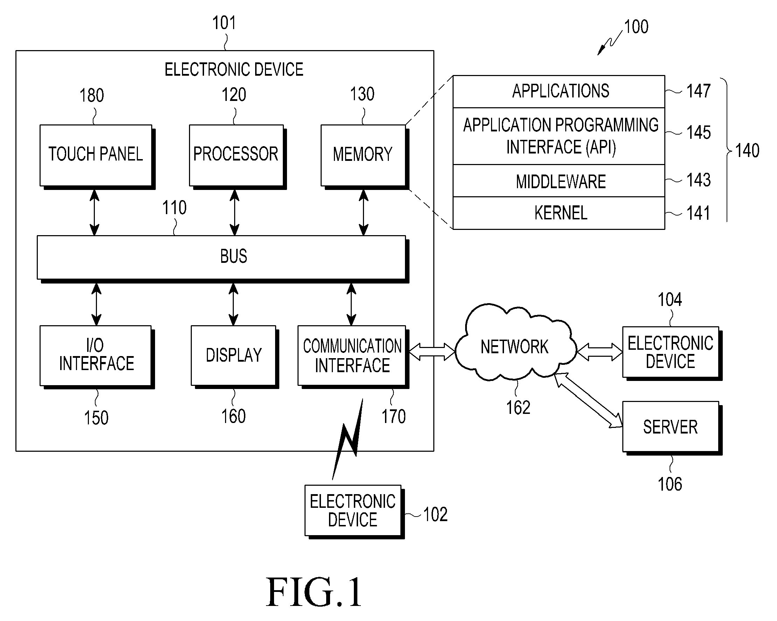

FIG. 1 is a diagram illustrating a network environment 100 including an electronic device 101, according to an embodiment of the present disclosure.

Referring to FIG. 1, the electronic device 101 includes a bus 110, a processor 120, a memory 130, an input/output (I/O) interface 150, a display 160, a communication interface 170 and a touch panel 180. The electronic device 101 may omit at least one of the above components, or may include other components.

The bus 110 may include, for example, a circuit that connects the components 120-180 to each other, and transfers the communication (e.g., a control message and/or data) between the components 120-180.

The processor 120 may include one or more of a central processing unit (CPU), an application processor (AP), and/or a communication processor (CP). The processor 120 may, for example, execute a control and/or communication-related operation or data processing for at least one other component of the electronic device 101. The processor 120 may be referred to as a controller, or may include the controller as a part thereof.

The memory 130 may include volatile and/or non-volatile memory. The memory 130 may, for example, store a command or data related to at least one other component of the electronic device 101. The memory 130 may store software and/or a program 140. The program 140 may include, for example, a kernel 141, a middleware 143, an application programming interface (API) 145, and/or an application program (or 'application') 147. At least some of the kernel 141, the middleware 143 and/or the API 145 may be referred to as an operating system (OS).

The kernel 141 may, for example, control or manage the system resources (e.g., the bus 110, the processor 120, the memory 130 or the like) that are used to execute the operation or function implemented in other programs (e.g., the middleware 143, the API 145, the application program 147 and the like). Further, the kernel 141 may provide an interface by which the middleware 143, the API 145 or the application program 147 can control or manage the system resources by accessing the individual components of the electronic device 101.

The middleware 143 may, for example, perform an intermediary role so that the API 145 or the application program 147 may exchange data with the kernel 141 by communicating with the kernel 141. Further, the middleware 143 may process one or more work requests received from the application program 147 according to their priority. For example, the middleware 143 may give priority to use the system resources (e.g., the bus 110, the processor 120, the memory 130 or the like) of the electronic device 101, to at least one of the application programs 147. For example, the middleware 143 may process the one or more work requests according to the priority given to at least one of the application programs 147, thereby performing scheduling or load balancing for the one or more work requests.

The API 145, for example, is an interface by which the application 147 controls the function provided in the kernel 141 or the middleware 143 and may include at least one interface or function (e.g., a command) for file control, window control, image processing and/or character control.

The I/O interface 150 may, for example, serve as an interface that can transfer a command or data received from the user or other external device to the other components of the electronic device 101. Further, the I/O interface 150 may output a command or data received from the other components of the electronic device 101, to the user or other external devices.

The display 160 may include, for example, a liquid crystal display (LCD) display, a light emitting diode (LED) display, an organic light emitting diode (OLED) display, a micro-electromechanical systems (MEMS) display, or an electronic paper display. The display 160 may, for example, display a variety of content (e.g., texts, images, videos, icons, symbols or the like), for the user. The display 160 may include a touch screen, and may receive a touch input, a gesture input, a proximity input or a hovering input made by, for example, an electronic pen or a part of the user's body.

The communication interface 170 may, for example, establish communication between the electronic device 101 and an external device (e.g., a first external electronic device 102, a second external electronic device 104 or a server 106). For example, the communication interface 170 may communicate with the second external electronic device 104 or the server 106 by being connected to a network 162 through wireless communication or wired communication.

The wireless communication may include at least one of, for example, long term evolution (LTE), long term evolution-advanced (LTE-A), code division multiple access (CDMA), wideband code division multiple access (WCDMA), universal mobile telecommunication system (UMTS), wireless broadband (WiBro) or global system for mobile communication (GSM), as a cellular communication protocol. The wired communication may include at least one of, for example, universal serial bus (USB), high definition multimedia interface (HDMI), recommended standard 232 (RS-232) or plain old telephone service (POTS). The network 162 may include a telecommunications network, for example, at least one of the computer network (e.g., a local area network (LAN) or a wide area network (WAN)), the Internet, or the telephone network.

Each of the first and second external electronic devices 102 and 104 may be a device that is the same as or different from the electronic device 101. The server 106 may include a group of one or more servers. All or some of the operations executed in the electronic device 101 may be executed in one or multiple other electronic devices 102, 104, or the server 106. If the electronic device 101 should perform a certain function or service automatically or upon request, the electronic device 101 may request at least some of the functions related thereto from the external electronic devices 102, 104, or the server 106, instead of or in addition to spontaneously executing the function or service. The e external electronic devices 102, 104, or the server 106 may execute the requested function or additional function, and deliver the results to the electronic device 101. The electronic device 101 may process the received results intact or additionally, thereby providing the requested function or service. To this end, for example, cloud computing, distributed computing, or client-server computing technology may be used.

The touch panel 180 may support the operation of the electronic device 101 by performing at least one of the operations (or functions) implemented in the electronic device 101.

The touch panel 180 may include a plurality of electrodes. The plurality of electrodes may measure an electric field in the surrounding and output an electrical signal in response to the measured electric field. The touch panel 180 may include a transmitting electrode for transmitting an electric field and a receiving electrode for measuring the electric field. The transmitting electrode and the receiving electrode may be implemented by separate hardware. Otherwise, the transmitting electrode and the receiving electrode may be implemented in a single hardware in a time division manner.

The touch panel 180 may process at least some of the information obtained from other components (e.g., at least one of the processor 120, the memory 130, the I/O interface 150, and the communication interface 170), and use the processed information in various ways. For example, using the processor 120, or independently of the processor 120, the touch panel 180 may control at least some functions of the electronic device 101 so that the electronic device 101 may interwork with the external electronic devices 102, 104, or the server 106. The touch panel 180 may be integrated in the processor 120 or the communication interface 170. At least one configuration of the touch panel 180 may be included in the server 106 and may receive the support of at least one operation implemented in the touch panel 180 from the server 106.

The processor 120 may obtain a measurement signal measured at each electrode of the plurality of electrodes and determine worn information or adherence information of the electronic device based on the measurement signal. As described herein, the adherence information may include at least one of proper adherence, a degree of skin hydration, and measurement target, and may be referred to as worn information.

The processor 120 may determine whether the electronic device 101 is in proper adherence to the measurement target based on a magnitude of the measurement signal.

The processor 120 may determine that the electronic device 101 is in proper adherence to the measurement target if a difference between a magnitude of the measurement signal and a reference value exceeds a preset threshold.

The processor 120 may determine whether the electronic device is in proper adherence to the measurement target based on a measurement signal corresponding to at least one crossing point between the plurality of electrodes.

The processor 120 may determine whether the electronic device is in proper adherence to the measurement target based on the number of crossing points at which a difference between a magnitude of the measurement signal and a reference value exceeds a preset threshold.

The processor 120 may determine an area (i.e., a contact area) of a contact region based on positions of crossing points at which a difference between a magnitude of the measurement signal and a reference value exceeds a preset threshold and determine whether the electronic device 101 is in proper adherence to the measurement target based on the contact area.

The processor 120 may determine a shape of a contact region based on a shape of a region including crossing points at which a difference between a magnitude of the measurement signal and a reference value exceeds a preset threshold and determine whether the electronic device is in proper adherence to the measurement target based on the contact shape.

A pressure sensor may measure a pressure applied to the electronic device 101. The processor 120 may determine whether the electronic device 101 is in proper adherence to the measurement target based on the measurement signal and the measured pressure.

The processor 120 may determine a degree of skin hydration of a user on which the electronic device is worn based on the measured measurement signal.

A sensing module may measure a biological signal from the user on which the electronic device is worn. The processor 120 may correct the biological signal using the degree of skin hydration.

The memory 130 may store association information between the magnitude of the measurement signal and the measurement target. The processor 120 may determine a measurement target of the electronic device based on the magnitude of the measurement signal and the association information.

An additional touch panel may be provided on the electronic device 101 and may include a plurality of additional electrodes. The processor 120 may determine the adherence information based on a difference between measurement signals from each of the plurality of electrodes and measurement signals from each of the plurality of additional electrodes.

The processor 120 may determine contact information of the electronic device based on the measurement signal and determine a portion of user's body on which the electronic device 101 is worn based on the contact information. The contact information may be at least one of a contact area on the touch panel 180, a contact shape on the touch panel 180, or a three-dimensional (3D) distribution of a contact.

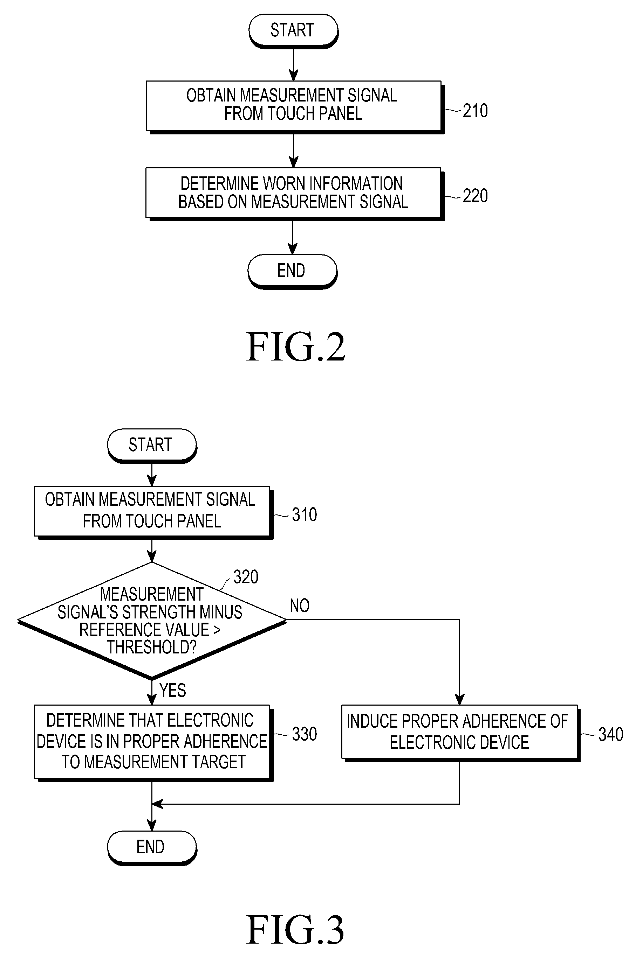

FIG. 2 is a flowchart illustrating a control method of the electronic device 101, according to an embodiment of the present disclosure.

In step 210, the electronic device 101 obtains a measurement signal from the touch panel 180. The measurement signal from the touch panel 180 may be an electrical signal measured for each electrode channel. For example, the touch panel 180 may scan each of a plurality of electrodes in the touch panel 180 in response to a preset timing, and receive an electrical signal measured during the scanning period. An electrode included in the touch panel 180 may output an electrical signal based on an electric field formed around the electrode, so the electrical signal may be referred to as a measurement signal. The electronic device 101 may determine a measurement point on the touch panel 180 based on the measurement signal. The electronic device 101 may determine a measurement point depending on the change in capacitance of electrodes or between electrodes, or the strength of the measurement signal. A detailed description thereof will be described in greater detail below.

In step 220, the electronic device 101 may determine worn information based on the measurement signal. The electronic device 101 may determine whether the electronic device 101 is in proper adherence to the measurement target based on the measurement signal. The electronic device 101 may determine a degree of adherence (or a degree of proximity) to the measurement target. The electronic device 101 may determine a degree of contact with the electronic device 101. For example, the electronic device 101 may determine a contact area of the electronic device 101 based on the number of touched nodes among the nodes of the touch panel 180. The electronic device 101 may determine a contact pressure, a degree of skin hydration, a measurement target, a surrounding environment of the electronic device 101, and a worn portion.

The electronic device 101 may operate in response to the determined worn information. For example, the electronic device 101 may include a photoplethysmograph (PPG) sensor. The PPG sensor may measure a user's heart rate. If it is determined that the degree of adherence is relatively low, the electronic device 101 may increase a signal-to-noise ratio (SNR) of PPG by increasing the amount of the light of the PPG sensor.

With regard to the PPG sensor, a light-emitting unit may apply the light to the user's body and a light-receiving unit may detect the amount of reflected light. An increase/decrease of arterial blood volume in a blood vessel is repeated by the pressure generated by the heart rate. Using the proportion or correlation between the arterial blood volume and the amount of reflected light (e.g., an arterial blood volume estimation equation based on the amount of light by the regression analysis), the PPG sensor may perform a heart rate measurement. It is noted that oxidized hemoglobin has a high absorbency of the light at a wavelength of 940nmand oxygen hemoglobin has a high absorbency of the light at a wavelength of 660nm. Thus, in a case where a light emitting device is used around wavelengths of 660nm and 940nm in the light-emitting unit of the PPG sensor, the PPG sensor may measure a ratio of the oxygen hemoglobin to the oxidized hemoglobin by measuring the amount of reflected light for the light of each wavelength. The electronic device 101 may determine oxygen saturation SpO₂ as the ratio.

FIG. 3 is a flowchart illustrating a control method of the electronic device 101, according to an embodiment of the present disclosure.

In step 310, the electronic device 101 may obtain a measurement signal from the touch panel 180. The electronic device 101 may obtain a measurement signal for each electrode channel of the touch panel 180.

In step 320, the electronic device 101 may determine whether a difference between strength of the measurement signal and a reference value exceeds a threshold. The electronic device 101 may set, as a reference value, a strength of a measurement signal that is measured in a case where no conductor is disposed near the touch panel 180.

The electronic device 101 may determine a difference between a measurement signal for each electrode channel and the reference value, and if the difference exceeds a threshold, the electronic device 101 may determine in step 330 that the electronic device 101 is in proper adherence to the measurement target. However, if the difference between the measurement signal for each electrode channel and the reference value is less than or equal to the threshold, the electronic device 101 may induce the proper adherence in step 340, thereby determining that the electronic device 101 is not in proper adherence to the measurement target.

For example, the electronic device 101 may display a screen of inducing the proper adherence on the touch panel 180. Otherwise, the electronic device 101 may perform a mechanical operation for the proper adherence. For example, in a case where the electronic device 101 is a wristwatch-type wearable electronic device, the electronic device 101 may induce the proper adherence by adjusting a length of the strap of the electronic device 101 on the wrist. For example, in a case where the electronic device 101 is a wristwatch-type wearable electronic device, the electronic device 101 may induce the proper adherence of a contact-required portion, by increasing the volume of some components (e.g., the strap or the housing) of the electronic device 101 by injecting air or modifying the shape.

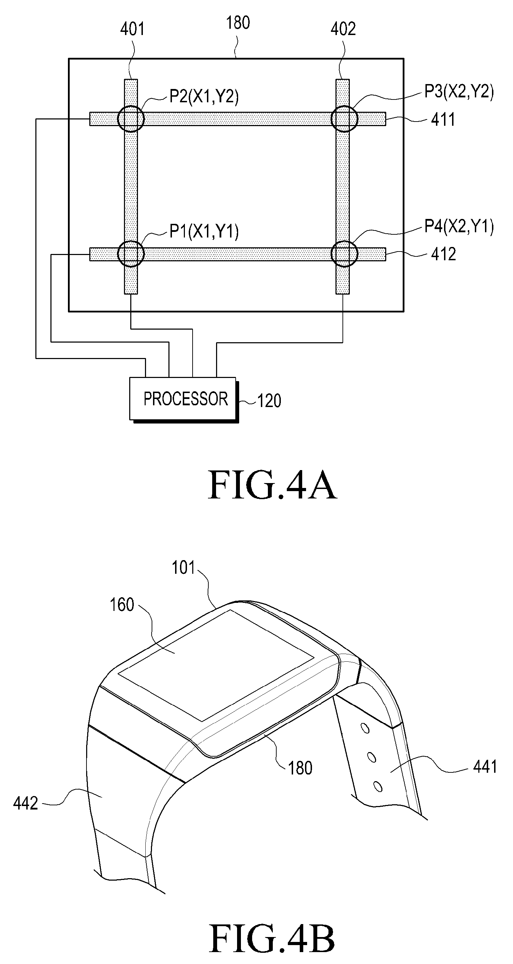

FIG. 4A is a schematic view of the touch panel 180, according to an embodiment of the present disclosure.

As shown in FIG. 4A, the touch panel 180 may include one or more electrodes 401, 402, 411 and 412. The touch panel 180 may include the electrodes 411 and 412 extending in the x-axis direction to measure the y-axis coordinates of the measurement target, and the electrodes 401 and 402 extending in the y-axis direction to measure the x-axis coordinates of the measurement target. Extending in the x-axis direction may mean that the length in the x-axis direction of the electrode is longer than the length in the y-axis direction of the electrode, and extending in the y-axis direction may mean that the length in the y-axis direction of the electrode is longer than the length in the x-axis direction of the electrode.

The electronic device 101 may determine a touch-occurred point among crossing points P1, P2, P3 and P4 between the electrodes 401, 402, 411 and 412. For example, if the user touches a crossing point P1(X1,Y1) with their finger, the electronic device 101 may detect a change in the measurement signal received at a receiving electrode corresponding to the position P1. Further, if the user touches a crossing point P2(X1,Y2) with their finger, the electronic device 101 may detect a change in the measurement signal received at a receiving electrode corresponding to the position P2.

The electrodes 401, 402, 411 and 412 may be made from any suitable material, as long as the electrode is made from a material that is capable of outputting an electrical signal by receiving an electric field, such as printed circuit board (PCB), flexible printed circuit board (FPCB), and indium-tin-oxide (ITO) film. Further, there is no limitation on the number of electrodes.

As shown in FIG. 4B, the touch panel 180 may be disposed on a back of the wristwatch-type wearable electronic device 101. Accordingly, if the user wears the wristwatch-type wearable electronic device 101, the touch panel 180 may detect a contact or an adherence between the user's skin and the electronic device 101. Straps 441 and 442 may be connected to the main body including the display 160 and the touch panel 180. The touch panel 180 may be disposed on one or more straps, or may extend from the back of the electronic device 101 up to one or more straps.

The one or more electrodes 401, 402, 411 and 412 included in or functionally connected to the touch panel 180 may have a predetermined capacitance. If the user touches one point, a predetermined capacitance of the one or more electrodes 401, 402, 411 and 412 may be changed.

The processor 120 may determine a contact point based on the changed capacitance. More specifically, a transmitting electrode may transmit a transmission signal. The one or more electrodes 401, 402, 411 and 412 may measure a transmission signal. For example, a transmission signal may be an electric field, and the one or more electrodes 401, 402, 411 and 412 may measure an electric field from the transmitting electrode. Herein, the transmitting electrode may be provided separately from the one or more electrodes 401, 402, 411 and 412. Alternatively, the transmitting electrode may be one of the one or more electrodes 401, 402, 411 and 412. For example, the processor 120 may set one of the electrodes 411 and 412 extending in the x-axis direction, as a transmitting electrode, and may control the electrodes 401 and 402 extending in the y-axis direction so as to measure a transmission signal while the transmitting electrode outputs the transmission signal. Thereafter, the processor 120 may set one of the electrodes 401 and 402 extending in the y-axis direction, as a transmitting electrode, and may control the electrodes 411 and 412 extending in the x-axis direction so as to measure a transmission signal while the transmitting electrode outputs the transmission signal. The one or more electrodes 401, 402, 411 and 412 may output an electrical signal in response to the measured transmission signal. The processor 120 may process the electrical signal in various processing units such as voltage, current, capacitance or power, and those skilled in the art may readily appreciate that there is no limit on the processing units.

The processor 120 may determine a contact point based on the measurement signal measured at the one or more electrodes 401, 402, 411 and 412. The processor 120 may determine a contact point based on a difference between the measurement signals measured at the one or more electrodes 401, 402, 411 and 412 and the reference value.

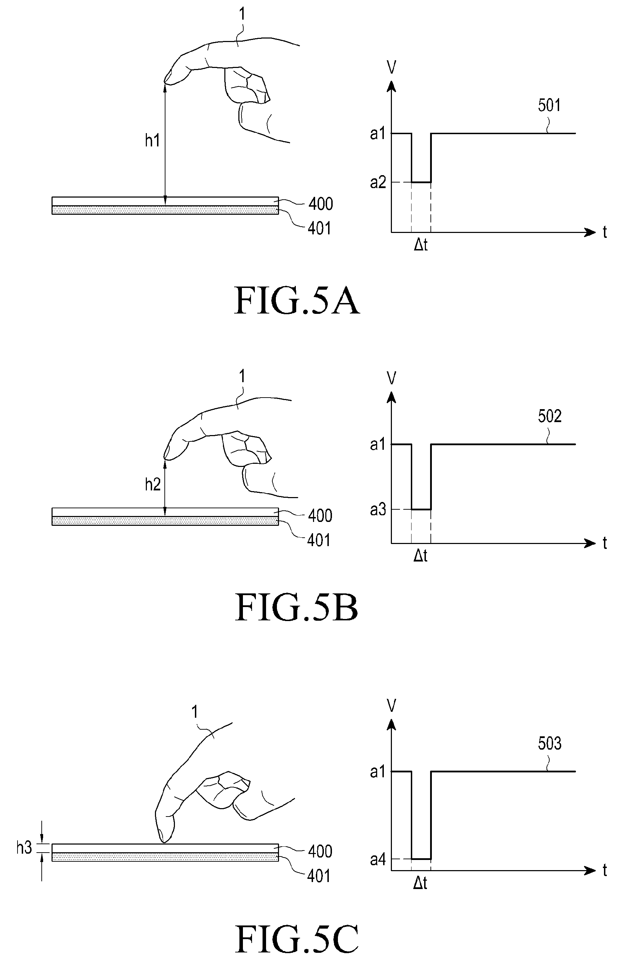

FIGs. 5A-5C are diagrams illustrating a change in strength of a measurement signal based on a distance between an electrode and a measurement target, according to an embodiment of the present disclosure. As shown in FIG. 5A, if a distance between the electrode 401 and a measurement target 1 is h1, a magnitude of a measurement signal 501 measured at the electrode 401 may be a2. A housing 400 of the electronic device 101 may be disposed on the first electrode 401. In FIG. 5A, Δt may be a scanning period for the electrode 401. Herein, a1 may be a reference value that is a measurement signal, which is measured at the electrode 401 when the measurement target 1 is not disposed near the electrode 401. If the measurement target 1 has approached the electrode 401 by h1, the measurement target 1 may receive a part of the electric field output from a transmitting electrode, so strength of the electric field received by the receiving electrode 401 may be reduced. Further, as the measurement target 1 approaches the electrode 401, a capacitance of the electrode 401 may be changed. As shown in FIGs. 5B and 5C, as the measurement target 1 approaches the electrode 401, the strength of the measurement signal may be reduced further. For example, if a distance between the measurement target 1 and the electrode 401 is h2, a strength of a measurement signal 502 during the scanning period Δt may be a3. In addition, if the measurement target 1 is in contact with the electrode 401, a strength of a measurement signal 503 during the scanning period Δt may be a4. The electronic device 101 may determine whether a difference between a reference value and strength of a measurement signal exceeds a preset threshold.

In the embodiments of FIGs. 5A-5C, the electronic device 101 may determine whether the difference is greater than a predetermined threshold d. It will be assumed herein that a1-a2 is less than d and a1-a3 is greater than d. Here, the threshold d is a reference value for determining whether the electronic device 101 is in adherence to the measurement target 1, and if a difference between the reference value and the measurement signal's strength is greater than the threshold d, the electronic device 101 may determine that the electronic device 101 and the measurement target 1 are in adherence to each other. If the measurement target 1 is away from the electrode 401 by h1, the electronic device 101 may determine that the electronic device 101 is not in adherence to the measurement target 1. If the measurement target 1 is away from the electrode 401 by h2, the electronic device 101 may determine that the electronic device 101 is in adherence to the measurement target 1. In another embodiment, a predetermined threshold d may be determined as an approximate value of a1-a4, and in this embodiment, if the measurement target 1 is in contact with the housing 400 of the electronic device 101 including the electrode 401 (i.e., if the electrode 401 is away from the measurement target 1 by h3), the electronic device 101 may determine that the electronic device 101 is in adherence to the measurement target 1.

The electronic device 101 may determine whether the measurement target 1 is in proper adherence to each of the electrodes 401, 402, 411 and 412. The electronic device 101 may determine whether the electronic device 101 is in proper adherence to the measurement target 1 based on whether the measurement target 1 is in proper adherence to each of the electrodes 401, 402, 411 and 412. Further, the electronic device 101 may determine whether the electronic device 101 is in proper adherence to the measurement target 1 based on the measurement signals at the nodes set by the electrodes 401, 402, 411 and 412.

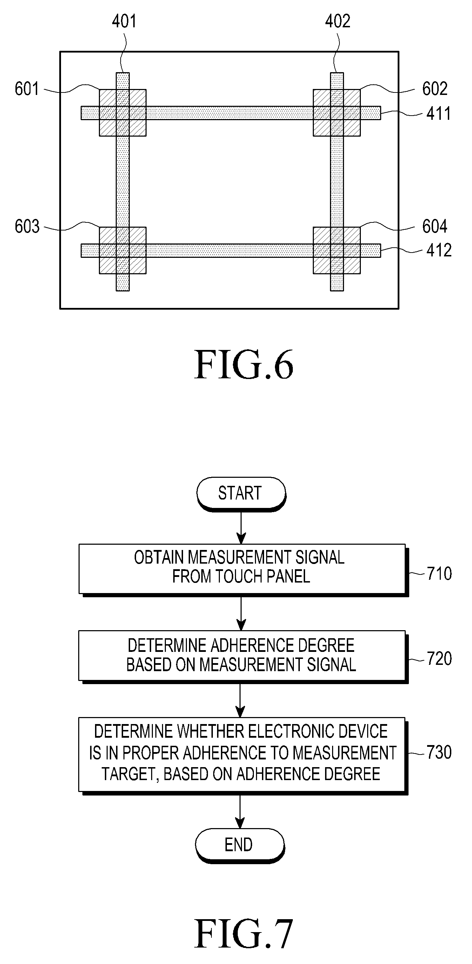

FIG. 6 is a schematic view of nodes set by electrodes, according to an embodiment of the present disclosure. As shown in FIG. 6, the electronic device 101 may: set a crossing point between the electrode 401 and the electrode 411, as a first node 601; set a crossing point between the electrode 402 and the electrode 411, as a second node 602; set a crossing point between the electrode 401 and the electrode 412, as a third node 603; and set a crossing point between the electrode 402 and the electrode 412, as a fourth node 604.

The electronic device 101 may, for example, measure a difference between a strength of a measurement signal for each node and a reference value as shown in Table 1 below.

**Table 1**

| Node | First node | Second node | Third node | Fourth node |
|---|---|---|---|---|
| Measurement signal - reference value | u1 | u2 | u3 | u4 |

For example, a difference between the strength of the measurement signal and the reference value at the first node may be u1, a difference between the strength of the measurement signal and the reference value at the second node may be u2, a difference between the strength of the measurement signal and the reference value at the third node may be u3, and a difference between the strength of the measurement signal and the reference value at the fourth node may be u4.

The electronic device 101 may determine the number of nodes at which a difference between the strength of the measured signal and the reference value exceeds a preset threshold, thereby determining that the electronic device 101 is in proper adherence to the measurement target. The electronic device 101 may determine whether the electronic device 101 is in proper adherence to the measurement target based on the number of nodes at which the electronic device 101 is in proper adherence to the measurement target. Further, the electronic device 101 may determine a contact area of the electronic device 101 based on the number of nodes at which the electronic device 101 is in proper adherence to the measurement target. The electronic device 101 may determine whether the electronic device 101 is in proper adherence to the measurement target based on the contact area.

FIG. 7 is a flowchart illustrating a control method of the electronic device 101, according to an embodiment of the present disclosure.

In step 710, the electronic device 101 may obtain a measurement signal from the touch panel 180.

In step 720, the electronic device 101 may determine a degree of adherence based on the measurement signal. The electronic device 101 may determine the degree of adherence based on at least one of the strength/magnitude of the measurement signal from the touch panel 180, the number of nodes at which a difference between the measurement signal and the reference value is greater than or equal to a threshold, the area of the contact region, or the shape of the contact region. The degree of adherence (or the degree of proximity) may be determined using at least one of the difference between the measurement signal and the reference value, the number of nodes, the contact area, or the contact shape. The degree of adherence may be a sum weighted using some of predetermined values according to the variation between the measurement signal and the reference value, the number of nodes, the contact area, or the contact shape.

In step 730, the electronic device 101 may determine whether the electronic device 101 is in proper adherence to the measurement target based on the degree of adherence. In addition, the electronic device 101 may operate depending on the degree of adherence. For example, the electronic device 101 may determine a type of the sensor that is turned on depending on the degree of adherence. The electronic device 101 may turn off a biosensor at a step-1 degree of adherence, turn on a thermometer at a step-2 degree of adherence, turn on a PPG sensor and a galvanic skin reflex (GSR) sensor at a step-3 degree of adherence, and turn on an electrocardiogram (ECG) sensor, an electroencephalogram (EEG) sensor, an electromyograph (EMG) sensor and a blood pressure sensor at a step-4 degree of adherence.

Further, the electronic device 101 may determine a turned-on sensor group depending on the degree of adherence. For example, the electronic device 101 may turn on a first sensor group including the ECG sensor, the GSR sensor, the acceleration sensor and the GPS sensor at the step-1 degree of adherence, turn on a second sensor group including the PPG sensor, the pulse sensor, the acceleration sensor and the GPS sensor at the step-2 degree of adherence, and turn on a third sensor group including the body temperature sensor, the respiratory sensor, the acceleration sensor and the GPS sensor at the step-3 degree of adherence.

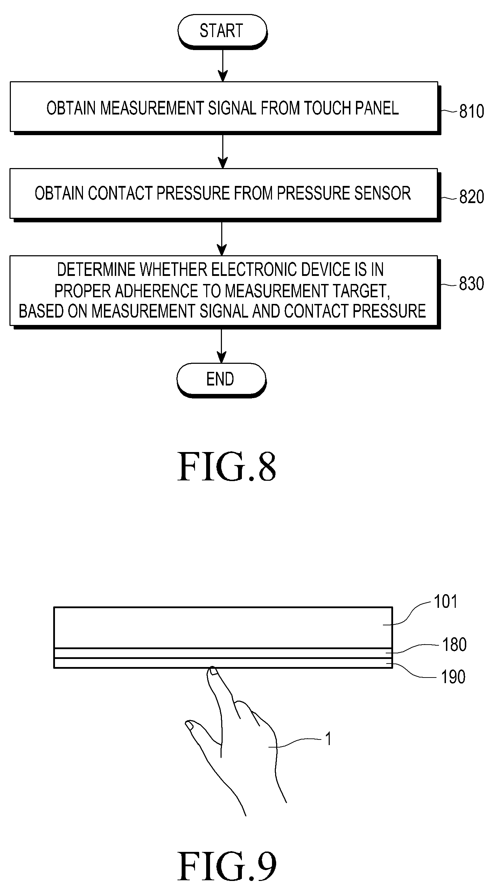

FIG. 8 is a flowchart illustrating a control method of the electronic device 101, according to an embodiment of the present disclosure.

In step 810, the electronic device 101 may obtain a measurement signal from the touch panel 180.

In step 820, the electronic device 101 may obtain a contact pressure from a pressure sensor. The electronic device 101 may further include a pressure sensor capable of additionally measuring a pressure.

In step 830, the electronic device 101 may determine whether the electronic device 101 is in proper adherence to the measurement target based on the measurement signal and the contact pressure from the touch panel 180. For example, before the electronic device 101 is in contact with the measurement target, the electronic device 101 may determine whether the electronic device 101 is in proper adherence to the measurement target based on the measurement signal from the touch panel 180. In addition, after the electronic device 101 is in contact with the measurement target, the electronic device 101 may determine whether the electronic device 101 is in proper adherence to the measurement target based on the contact pressure from the pressure sensor.

FIG. 9 is a side view of the electronic device 101, according to an embodiment of the present disclosure.

As shown in FIG. 9, the electronic device 101 may include the touch panel 180 and a pressure sensor 190. The pressure sensor 190 may be disposed on a back of the electronic device 101, and the touch panel 180 may be disposed on the top of the pressure sensor 190. The pressure sensor 190 and the touch panel 180 may be interchanged in position.

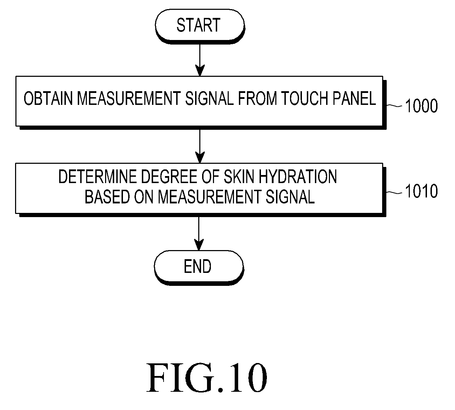

FIG. 10 is a flowchart illustrating a control method of the electronic device 101, according to an embodiment of the present disclosure.

In step 1000, the electronic device 101 may obtain a measurement signal from a touch panel.

In step 1010, the electronic device 101 may determine a degree of skin hydration based on the measurement signal. The degree of skin hydration may represent the degree of moisture formed on the skin. For example, with respect to skin that is relatively dry, the degree of skin hydration may have a lower value, and with respect to skin that is relatively moist,, the degree of skin hydration may have a higher value.

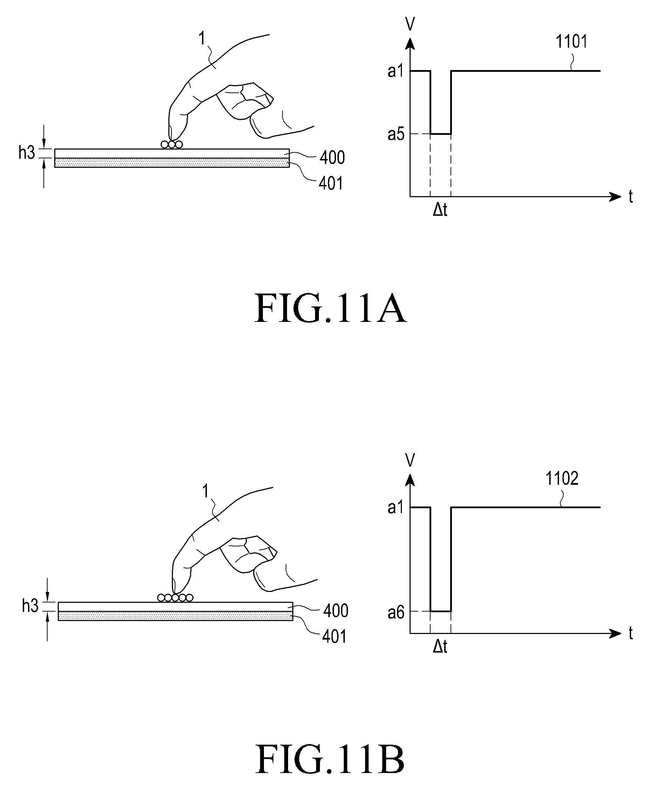

FIGs. 11A and 11B are diagrams illustrating an association (or relationship) between a degree of skin hydration and strength of a measurement signal, according to an embodiment of the present disclosure.

As shown in FIG. 11A, the measurement target 1 may be spaced apart from the electrode 401 by h3. In one embodiment, h3 may be a value approximating the thickness of the housing 400. The measurement target 1 may have a skin hydration degree of, for example, w1. The electronic device 101 may measure a measurement signal 1101 during the scanning period Δt. The electronic device 101 may measure strength a5 of the measurement signal 1101 during the scanning period Δt.

As shown in FIG. 11B, the measurement target 1 may be spaced apart from the electrode 401 by h3. The measurement target 1 may have a skin hydration degree of, for example, w2. Here, w2 may be greater than w1. The electronic device 101 may measure a measurement signal 1102 during the scanning period Δt. The electronic device 101 may measure strength a6 of the measurement signal 1102 during the scanning period Δt. Here, a6 may be less than a5. As the degree of skin hydration of the measurement target 1 is relatively high, the strength of the measurement signal may be relatively low. As the degree of skin hydration degree of the measurement target 1 is relatively high, the measurement target 1 may receive a larger part of the transmission signal from the transmitting electrode. Accordingly, the strength of the transmission signal received at the receiving electrode may be relatively low. The degree of skin hydration degree and the measurement signal strength may vary depending on the contact area. For example, the area of the contact region in a case where the user touches the touch panel 180 with a finger tip that is straightened in the vertical direction, may be different from the area of the contact region in a case where the user touches the touch panel 180 with a finger pad having a fingerprint provided by laying down the finger on the touch panel 180. Accordingly, since the absolute amount of the moisture content varies depending on the contact area of the skin, the variations of the degree of skin hydration and the measurement signal strength may vary depending on the contact area of the skin. Since the area of the skin being in contact with the touch panel 180 varies depending on the pressure applied by the finger, the absolute amount of the moisture content may also vary depending on the pressure applied by the finger, so the variations of the degree of skin hydration and the measurement signal strength may vary depending on the pressure applied by the finger. As described above, the electronic device 101 may calculate the degree of skin hydration by compensating the measurement signal depending on the contact area.

The electronic device 101 may store, in advance, an association between the strength of the measurement signal and the degree of skin hydration. The electronic device 101 may determine based on the association that the skin hydration degree corresponding to the strength a5 of the measurement signal 1101 is w1. In addition, the electronic device 101 may determine based on the association that the skin hydration degree corresponding to the strength a6 of the measurement signal 1102 is w2.

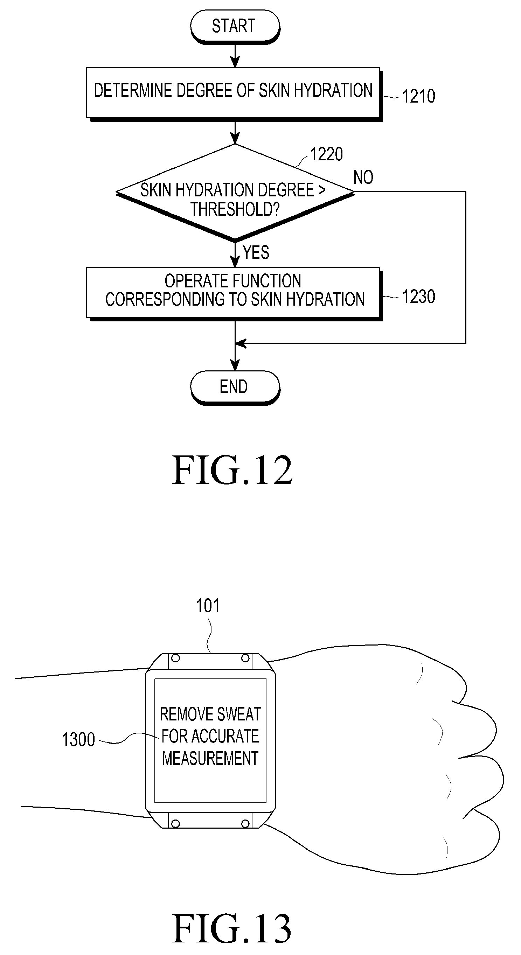

FIG. 12 is a flowchart illustrating a control method of the electronic device 101, according to an embodiment of the present disclosure.

In step 1210, the electronic device 101 may determine a degree of skin hydration. The electronic device 101 may determine the degree of skin hydration based on the measurement signal from the touch panel 180. The electronic device 101 may determine the degree of skin hydration based on the pre-stored association between the strength of the measurement signal and the degree of skin hydration.

The electronic device 101 may determine in step 1220 whether the determined degree of skin hydration exceeds a preset threshold. If the determined degree of skin hydration exceeds the preset threshold, the electronic device 101 may operate a function corresponding to skin hydration in step 1230.

FIG. 13 is a perspective view of the electronic device 101, according to an embodiment of the present disclosure. As shown in FIG. 13, the electronic device 101 may display a skin hydration screen 1300. The skin hydration screen 1300 may include a message asking the user to remove, for example, sweat on the skin. For example, the electronic device 101 may measure a degree of skin hydration upon detecting the user wearing the electronic device 101, and if the degree of skin hydration is higher than a predetermined threshold, the electronic device 101 may display the message asking the user to remove the sweat.

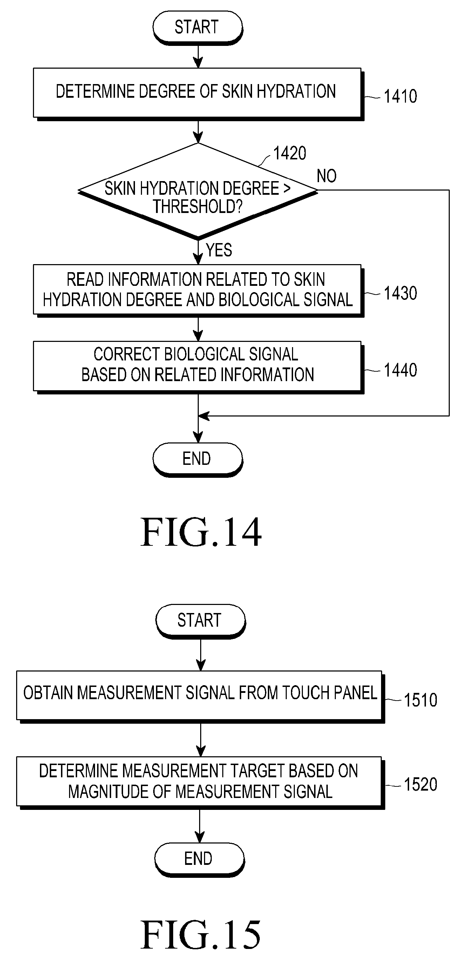

FIG. 14 is a flowchart illustrating a control method of the electronic device 101, according to an embodiment of the present disclosure.

In step 1410, the electronic device 101 may determine a degree of skin hydration. The electronic device 101 may determine the degree of skin hydration based on the measurement signal from the touch panel. The electronic device 101 may determine the degree of skin hydration based on the pre-stored association between the strength of the measurement signal and the degree of skin hydration.

The electronic device 101 may determine in step 1420 whether the determined degree of skin hydration exceeds a preset threshold. If the determined degree of skin hydration exceeds the preset threshold, the electronic device 101 may read information related to the degree of skin hydration and the biological signal in step 1430.

In step 1440, the electronic device 101 may correct (or analyze) the biological signal based on the read information related to the degree of skin hydration and the biological signal. The electronic device 101 may sense the biological signal. The biological signal may be sensed differently in a sensor depending on the degree of skin hydration. For example, if the degree of skin hydration is relatively high, the biological signal may be sensed relatively high in the sensor. Accordingly, the electronic device 101 may correct the biological signal based on the degree of skin hydration.

FIG. 15 is a flowchart illustrating a control method of the electronic device 101, according to an embodiment of the present disclosure.

In step 1510, the electronic device 101 may obtain a measurement signal from the touch panel 180.

In step 1520, the electronic device 101 may determine a measurement target based on a magnitude of the measurement signal. The strength of the measurement signal measured at an electrode may be different depending on the measurement target. For example, a capacitance may be different for each measurement target. As a different measurement target approaches an electrode, a measurement signal measured at a receiving electrode may be different. As a different measurement target approaches an electrode, a change in capacitance of electrodes or between electrodes may also be different.

The electronic device 101 may store, in advance, association information between the strength of the measurement signal at the receiving electrode and the type of the measurement target. Further, the electronic device 101 may store, in advance, association information between the capacitance of the receiving electrode and the type of the measurement target. The electronic device 101 may determine the type of the measurement target based on the strength of the measurement signal, and the association information between the strength of the measurement signal and the type of the measurement target. Further, the electronic device 101 may determine the type of the measurement target based on the capacitance of the receiving electrode, and the association information between the capacitance of the receiving electrode and the type of the measurement target.

The electronic device 101 may further measure a biological signal and may determine the type of the measurement target using the biological signal.

The electronic device 101 may operate in response to the determined type of the measurement target. For example, if it is determined that the measurement target is a person, the electronic device 101 may measure the biological signal by turning on a sensor for measuring a biological signal.

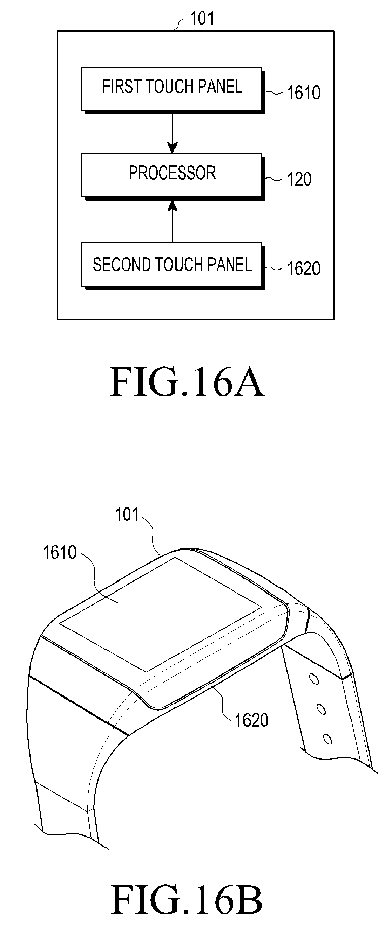

FIG. 16A is a diagram of the electronic device 101, according to an embodiment of the present disclosure.

The electronic device 101 may include a processor 120, a first touch panel 1610 and a second touch panel 1620. As shown in FIG. 16B, the first touch panel 1610 may be disposed on a front of the electronic device 101. More specifically, the electronic device 101 may be a wristwatch-type wearable electronic device, and the first touch panel 1610 may be disposed on the front of the electronic device 101. The first touch panel 1610 may include, for example, a plurality of transparent electrodes. A display may be disposed under the first touch panel 1610.

The plurality of transparent electrodes of the first touch panel 1610 may output a measurement signal to the processor 120. The processor 120 may determine a touch point on the first touch panel 1610 based on the measurement signals from the plurality of transparent electrodes. For example, the processor 120 may determine the touch point based on a relative magnitude of a measurement signal at each of the plurality of transparent electrode channels. The processor 120 may determine, as a touch point, the point corresponding to the electrode at which the measurement signal has the greatest magnitude. Otherwise, the processor 120 may determine the touch point based on the interpolation result for the measurement signal.

The second touch panel 1620, as shown in FIG. 16B, may be disposed on a back of the electronic device 101. Accordingly, if the user wears the electronic device 101, at least a portion of the second touch panel 1620 may approach (or contact) the user's skin. In other words, the second touch panel 1620 may be disposed on the back of the main body of the electronic device 101 and, the first touch panel 1610 may be disposed on the front of the main body of the electronic device 101. The second touch panel 1620 may include a plurality of electrodes. The plurality of electrodes may be transparent electrodes, or opaque electrodes. The plurality of electrodes of the second touch panel 1620 may output measurement signals to the processor 120. The processor 120 may determine worn information of the electronic device 101 based on the measurement signals from the second touch panel 1620. The processor 120 may determine whether the electronic device 101 is in proper adherence to the measurement target, a degree of adherence to the measurement target, a degree of contact with the electronic device 101, an area of the contact region, a shape of the contact region, the number of touched nodes among the nodes of the touch panel, a contact pressure, a degree of skin hydration, a measurement target, a surrounding environment, and a portion of a body of the user on which the electronic device 101 is worn).

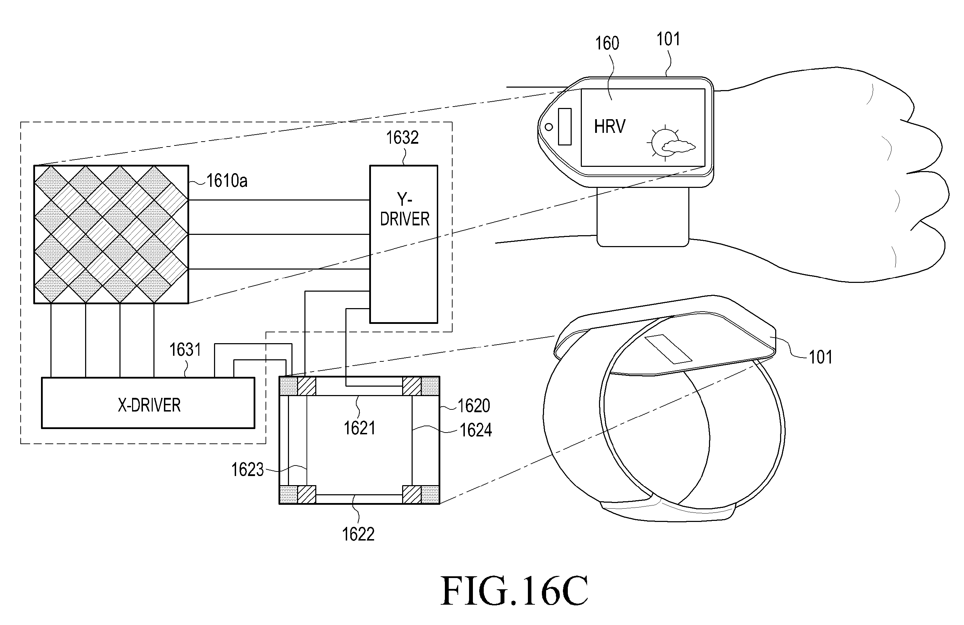

FIG. 16C illustrates a configuration of the electronic device 100, according to an embodiment of the present disclosure.

As shown in FIG. 16C, the display 160 may be provided on the front of the electronic device 101. An ITO film 1610a may be disposed on the top of the display 160. The ITO film 1610a may include a plurality of ITO electrodes. The ITO electrodes may include electrodes extending in the y-axis direction to measure the x-axis coordinates of the measurement target, and electrodes extending in the x-axis direction to measure the y-axis coordinates of the measurement target. Extending in the x-axis direction may mean that the length in the x-axis direction of the electrode is longer than the length in the y-axis direction of the electrode, and extending in the y-axis direction may mean that the length in the y-axis direction of the electrode is longer than the length in the x-axis direction of the electrode. In addition, as shown in FIG. 16C, the electrodes may be formed so that their extending direction may be changed multiple times.

Electrodes extending in the y-axis direction on the ITO film 1610a may be connected to an x-driver 1631, and electrodes extending in the x-axis direction may be connected to a y-driver 1632. The x-driver 1631 may connect the electrodes extending in the y-axis direction, to the processor 120. For example, the x-driver 1631 may control the electrodes extending in the y-axis direction so as to be connected to the processor 120 in their scanning period. The electronic device 101 may further include a received signal processing means including a filter, an amplifier and the like. The y-driver 1632 may connect the electrodes extending in the x-axis direction, to the processor 120.

A second touch panel 1620 may be provided on the back of the electronic device 101. The second touch panel 1620 may include electrodes 1623 and 1624 extending in the y-axis direction to measure the x-axis coordinates of the measurement target, and electrodes 1621 and 1622 extending in the x-axis direction to measure the y-axis coordinates of the measurement target.

The electrodes 1623 and 1624 extending in the y-axis direction on the touch panel 1620 may be connected to the x-driver 1631, and the electrodes 1621 and 1622 extending in the x-axis direction may be connected to the y-driver 1632. The x-driver 1631 may connect the electrodes extending in the y-axis direction, to the processor 120. For example, the x-driver 1631 may control the electrodes extending in the y-axis direction so as to be connected to the processor 120 in their scanning period. First parts among all channels of the x-driver 1631 or the y-driver 1632 may be allocated to the ITO film 1610a, and second parts may be allocated to the second touch panel 1620. If the sum of the number of channels of the ITO film 1610a and the number of channels of the second touch panel 1620 exceeds the total number of channels of the x-driver 1631 or the y-driver 1632, the x-driver 1631 or the y-driver 1632 may allocate the channels to the ITO film 1610a and the second touch panel 1620 in a time division manner. Alternatively, the ITO film 1610a and the second touch panel 1620 may share the scanning signal from the x-driver 1631 or the y-driver 1632.

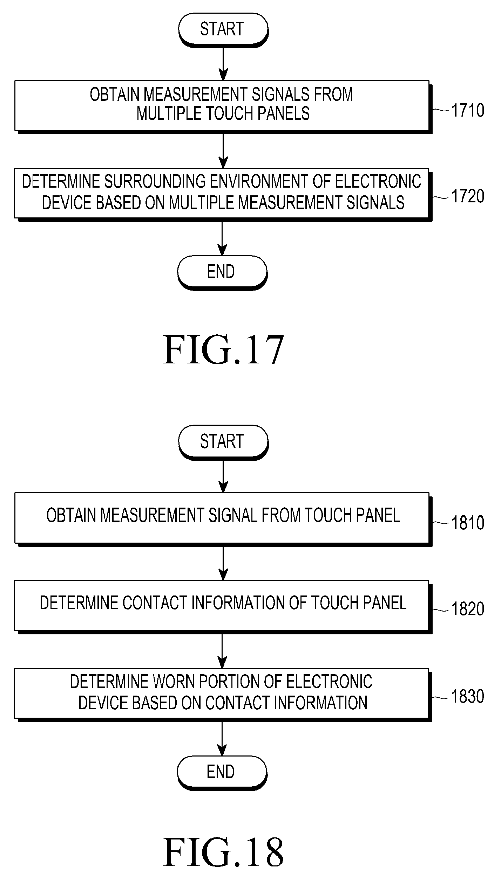

FIG. 17 is a flowchart illustrating a control method of the electronic device 101, according to an embodiment of the present disclosure.

In step 1710, the electronic device 101 may obtain measurement signals from a plurality of touch panels. For example, as shown in FIG. 16A, the electronic device 101 may obtain a first measurement signal from the first touch panel 1610 and a second measurement signal from the second measurement panel 1620.

In step 1720, the electronic device 101 may determine the surrounding environment of the electronic device 101 based on the plurality of measurement signals. In one embodiment, the electronic device 101 may determine a difference between the plurality of measurement signals. For example, as shown in FIG. 16A, the electronic device 101 may determine a difference between a strength of the first measurement signal from the first touch panel 1610 and a strength of the second measurement signal from the second touch panel 1620.

If the difference between the strength of the first measurement signal and the strength of the second measurement signal is less than a threshold, the electronic device 101 may determine that the electronic device 101 is worn in the water. If the difference between the strength of the first measurement signal and the strength of the second measurement signal is less than a threshold, the electronic device 101 may determine that a plurality of touch panels have the same worn information, so the electronic device 101 may determine that the surrounding environment is underwater.

It is assumed that there is a first difference between the first measurement signal measured on the first touch panel 1610 and a first reference value corresponding to the first touch panel 1610, and there is a second difference between the second measurement signal measured on the second touch panel 1620 and a second reference value corresponding to the second touch panel 1620. In this case, if it is determined that the first difference and the second difference are similar to each other, the electronic device 101 may determine that the electronic device 101 is in the water.

The electronic device 101 may determine that the electronic device 101 is in the water, even if the time that the strength of the first measurement signal from the first touch panel 1610 is changed is similar to the time that the strength of the second measurement signal from the second touch panel 1620 is changed.

The electronic device 101 may determine that the electronic device 101 is in the water, even if the strengths of the signals measured at the nodes of the first touch panel 1610 are less than a threshold, and the signal strengths are similar to each other.

The electronic device 101 may determine that the electronic device 101 is in the water, even if distribution (e.g., at least one of variance, standard deviation and skewness calculated using the measurement signals) of measurement signals measured at the nodes of the first touch panel 1610 is less than a predetermined deviation threshold, and representative values (e.g., average values or maximum values) of the measurement signals measured at the nodes are less than a predetermined threshold.

If it is determined that the electronic device 101 is in water, the electronic device 101 may run an underwater environment-related application, and display underwater environment-related information (e.g., swimming exercise quantity, swimming exercise patterns, heart rate measurement, blood pressure measurement, oxygen saturation, and the like).

The electronic device 101 may determine that the strength of the second measurement signal is higher than the strength of the first measurement signal. In this case, the electronic device 101 may determine that the electronic device is worn on the measurement target.

FIG. 18 is a flowchart illustrating a control method of the electronic device 101, according to an embodiment of the present disclosure.

In step 1810, the electronic device 101 may obtain a measurement signal from the touch panel 180.

In step 1820, the electronic device 101 may determine contact information of the touch panel 180. For example, the electronic device 101 may determine the contact information that is based on at least one of a contact shape on the touch panel 180, a contact area on the touch panel 180, and 3D distribution of the contact.

In step 1830, the electronic device 101 may determine a worn portion of the electronic device 101 based on the contact information. The electronic device 101 may perform an operation corresponding to the worn portion based on the worn portion. For example, the electronic device 101 may determine an active sensor among the sensors based on the worn portion. Table 2 shows sensors that are activated on their worn portions.

**Table 2**

| Worn portion | Forehead | Wrist | Arm | Brow | Neck | Ear |
|---|---|---|---|---|---|---|
| Sensor type | EEG sensor | ECG sensor | EMG sensor | EOG sensor | Pressure sensor | Temperature sensor |

The electronic device 101 may determine setting of an amplifier or a filter in response to the worn portion. For example, if it is determined that the worn portion of the electronic device 101 is the forehead, the electronic device 101 may determine setting suitable for an EEG signal. More specifically, for biological signals, their frequency ranges and voltage ranges may be different. The electronic device 101 may set a cut-off frequency of an analog filter or a digital filter for each measurement portion (or worn portion). For example, the electronic device 101 may change a time constant using a variable resistor or a variable capacitor of the analog filter, and may set the cut-off frequency by changing filter coefficients of the digital filter. Table 3 shows biological signals-specific setting values.

**Table 3**

| Biological signal | Voltage range (mV) | Frequency range (Hz) |
|---|---|---|
| ECG | 0.5 to 5.0 | 0.01 to 250 |
| EEG | 0.01 to 50.0 | 0.1 to 100 |
| EGG | 0.5 to 80.0 | 0 to 1 |
| EMG | 0.1 to 10.0 | 0.01 to 10000 |
| EOG | 0.05 to 3.5 | 0 to 50 |

The electronic device 101 may perform setting of the amplifier or the filter based on the biological signals-specific setting values in Table 2.

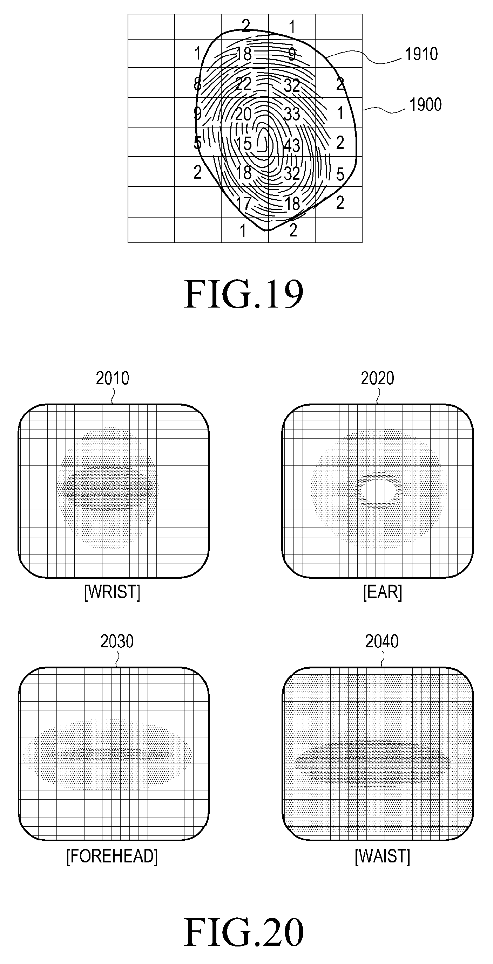

FIG. 19 is a diagram illustrating a contact shape and its contact information, according to an embodiment of the present disclosure. In FIG. 19, it is assumed that a user touches a touch panel 1900 using the finger pad.

A plurality of nodes may be set on the touch panel 1900. Each node of the plurality of nodes may be set to correspond to a crossing point between a plurality of electrodes included in the touch panel 1900. The electronic device 101 may measure a change in capacitance of each of the nodes on the touch panel 1900. For example, the electronic device 101 may measure a change in capacitance of each of the nodes based on the measurement signals from the plurality of electrodes of the touch panel 1900.

The electronic device 101 may determine a contact region 1910 on the touch panel 1900 based on the change in capacitance of each of the nodes. The electronic device 101 may determine a contact area and a contact shape based on the determined contact region 1910. The electronic device 101 may also determine 3D distribution of the contact by further using the capacitance change.

The electronic device 101 may store, in advance, information about at least one of a contact area for each user's body portion, a contact shape for each user's body portion, and 3D distribution of the contact. The electronic device 101 may determine a worn portion based on the pre-stored information and the measurement signal from the touch panel 1900.

FIG. 20 illustrates contact shapes for worn portions, according to an embodiment of the present disclosure. The electronic device 101 may store, in advance, a contact shape 2010 corresponding to the wrist of a user, a contact shape 2020 corresponding to the ear of a user, a contact shape 2030 corresponding to the forehead of a user, and a contact shape 2040 corresponding to the waist of a user. The electronic device 101 may determine a contact shape for the touch panel 180 based on the measurement signal from the touch panel 180. The electronic device 101 may determine a worn portion by comparing the determined contact shape with the contact shape information.

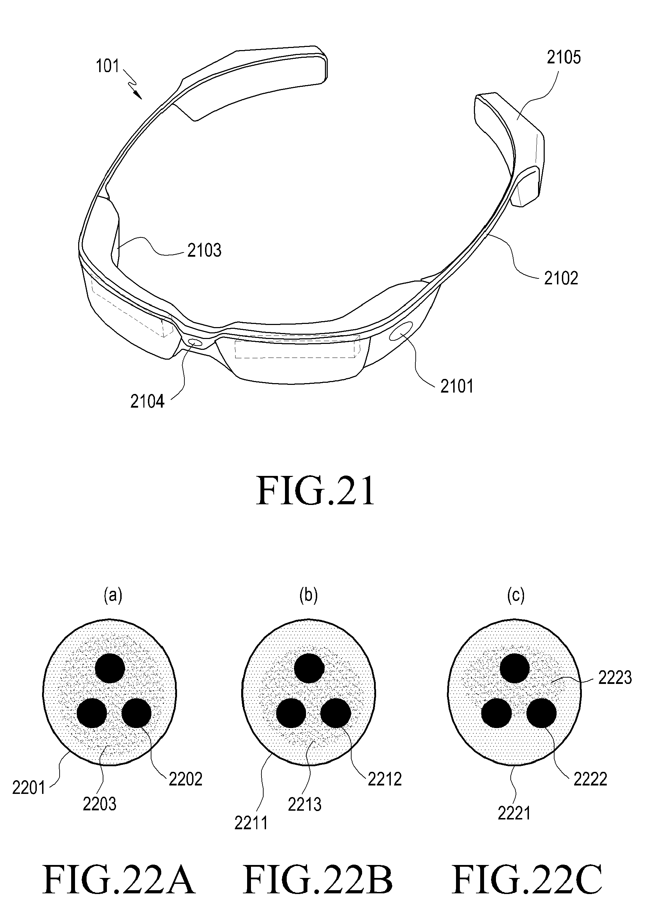

FIG. 21 is a perspective view of the electronic device 101, according to an embodiment of the present disclosure. As shown in FIG. 21, the electronic device 101 may be implemented as a glasses-type wearable electronic device. The electronic device 101 may include a plurality of touch panels 2101 to 2105 to determine worn information. The electronic device 101 may determine worn information of the electronic device 101 based on measurement signals from the plurality of touch panels 2101 to 2105. For example, the electronic device 101 may determine whether the electronic device 101 is in proper adherence to the measurement target. The glasses-type wearable electronic device may provide an augmented reality (AR) service, so the proper wear may be required. The electronic device 101 may determine whether the electronic device 101 is properly worn, based on the measurement signals from the plurality of touch panels 2101 to 2105.

FIGs. 22A-22C are diagrams illustrating of pad-type electronic devices, according to an embodiment of the present disclosure.

Referring to FIG. 22A, an electronic device 2201 may be implemented as an adhesive patch-type electronic device. The electronic device 2201 may include at least one electrode 2202 and an adhesive portion 2203. The patch-type electronic device may be attached to the user's skin similar to temporary tattoos, to perform a health check. The electronic device 2201 may wirelessly transmit the detected contents to the personal mobile device or computer, or may transmit the detected contents to the electronic devices managed by professionals such as doctors and trainers. Upon receiving the information, an external electronic device, e.g., external electronic devices 102, 104, or the server 106, may track the user's health information using the received information. For example, the external electronic devices 102, 104, or the server 106 may perform a temporary check, such as checking the user's electrocardiogram and electroencephalogram.

The patch-type electronic device may measure valid data while the patch-type electronic device is firmly attached to the user's skin. With respect to the patch-type electronic device, its replacement cycle may be different depending on the user's skin condition, skin texture, activity quantity, or activity type. For example, the patch-type electronic device should be discarded after being used only one time, but the patch-type electronic device may enable valid measurement even after it is used many time, e.g., five times or more.

FIGs. 22A-22C illustrate patch-type electronic devices which have been used once, twice and three times, respectively. It can be appreciated that areas of the adhesive portions 2203, 2213 and 2223 of the electronic devices 2201, 2211 and 2221 in FIGs. 22A-22C are gradually reduced. The reduction in the area of the adhesive portions 2203, 2213 and 2223 may be measured using the touch panels included in the electronic devices. The electrodes 2202, 2212 and 2222 may be sensors capable of biometric measurement for ECG, EEG, EKG, GSR, electrooculogram (EOG), EMG, body temperature, blood pressure, pulse, impedance, movement, blood gas, and the like. The electronic device or the external electronic device may output, in various ways, (i) a value by which the degree of patch's adherence to the user's body can be displayed for the user, (ii) whether the patch can be used, or (iii) how many more times the device can be used in the future.

For the patch type, its replacement cycle may vary for each user, depending on several factors such as the user's skin condition, age, gender, activity status, biorhythms, sleep status, and biometric sensor type. If the replacement cycle is differently informed based on the user-specific valid biological sensing, the cost savings may be possible for the user. Further, the user may determine whether there is an error in the measurement itself due to the wrong contact, or whether the measurement value is out of the normal range due to the abnormality of the body even though the biological signal measurement by the valid adherence is performed.

A method for controlling an electronic device comprising a touch panel including a plurality of electrodes may include obtaining a measurement signal measured at each of the plurality of electrodes and determining adherence information of the electronic device based on the measurement signal.

Determining the adherence information of the electronic device may include determining whether the electronic device is in proper adherence to a measurement target based on the measurement signal.

Determining the adherence information of the electronic device may include determining that the electronic device is in proper adherence to the measurement target if a difference between a magnitude of the measurement signal and a reference value exceeds a preset threshold.

Determining the adherence information of the electronic device may include determining whether the electronic device is in proper adherence to the measurement target based on a measurement signal corresponding to at least one crossing point between the plurality of electrodes.

Determining the adherence information of the electronic device may include determining whether the electronic device is in proper adherence to the measurement target based on the number of crossing points at which a difference between a magnitude of the measurement signal and a reference value exceeds a preset threshold.

Determining the adherence information of the electronic device may include determining a contact area based on a magnitude of the measurement signal and determining whether the electronic device is in proper adherence to the measurement target based on the contact area.

The method may further include measuring a pressure applied to the electronic device and determining the adherence information of the electronic device may include determining whether the electronic device is in proper adherence to the measurement target based on the measurement signal and the measured pressure.

Determining the adherence information of the electronic device may include determining a degree of skin hydration of a user on which the electronic device is worn based on the measured measurement signal.

The method may further include measuring a biological signal from the user on which the electronic device is worn and correcting the biological signal using the degree of skin hydration.

Determining the adherence information of the electronic device may include determining a measurement target of the electronic device based on the magnitude of the measurement signal and association information between the magnitude of the measurement signal and the measurement target.

Determining the adherence information of the electronic device may include determining contact information of the electronic device based on the measurement signal and determining a worn portion of the electronic device based on the contact information. The contact information may be a contact area or a contact shape on the touch panel.

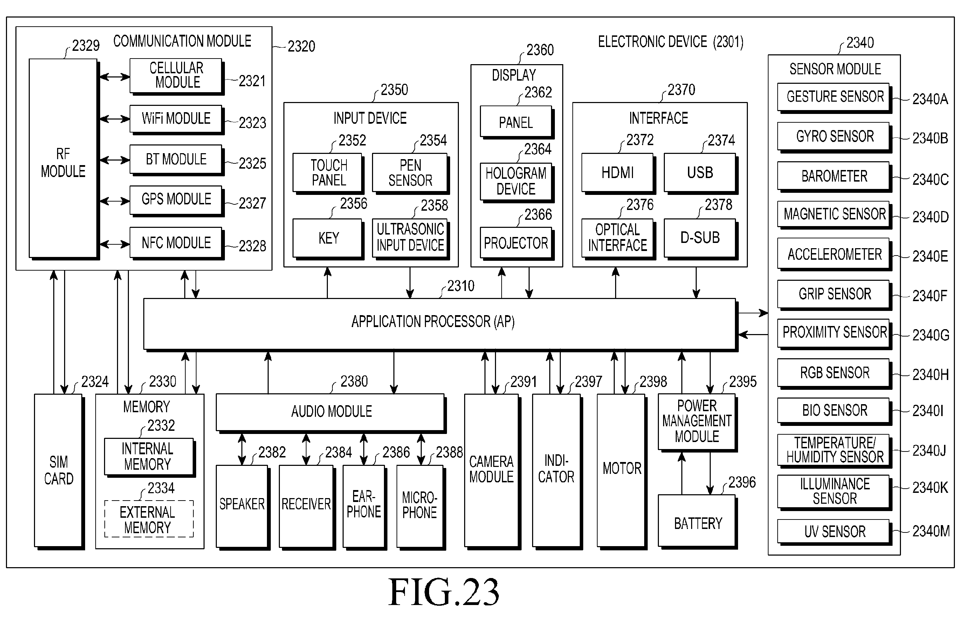

FIG. 23 is a diagram of an electronic device 2301, according to an embodiment of the present disclosure. The electronic device 2301 may include, for example, all or some of the parts of the electronic device 101 shown in FIG. 1. The electronic device 2301 includes at least one application processor (AP) 2310, a communication module 2320, a subscriber identification module (SIM) card 2324, a memory 2330, a sensor module 2340, an input device 2350, a display 2360, a touch panel 2352, an interface 2370, an audio module 2380, a camera module 2391, a power management module 2395, a battery 2396, an indicator 2397 and a motor 2398.

The AP 2310 may, for example, control a plurality of hardware or software components connected to the AP 2310 by running the operating system or application program, and may process and calculate a variety of data. The AP 2310 may be implemented as, for example, a system on chip (SoC). The AP 2310 may further include a graphic processing unit (GPU) and/or an image signal processor. The AP 2310 may include at least some (e.g., a cellular module 2321) of the components shown in FIG. 1. The AP 2310 may load, on a volatile memory, a command or data received from at least one of other components (e.g., a non-volatile memory) and process the loaded data, and may store a variety of data in a non-volatile memory.

The communication module 2320 may have a structure which is the same as or similar to that of the communication interface 170 in FIG. 1. The communication module 2320 may include, for example, the cellular module 2321, a wireless fidelity (WiFi) module 2323, a Bluetooth (BT) module 2325, a GPS module 2327, a near field communication (NFC) module 2328, and a radio frequency (RF) module 2329.

The cellular module 2321 may, for example, provide a voice call service, a video call service, a messaging service or an Internet service over a communication network. The cellular module 2321 may perform identification and authentication of the electronic device 2301 within the communication network using the SIM card 2324. The cellular module 2321 may have some of the functions that can be provided by the AP 2310. The cellular module 2321 may include a communication processor (CP).

Each of the WiFi module 2323, the BT module 2325, the GPS module 2327 or the NFC module 2328 may include, for example, a processor for processing the data transmitted or received through the corresponding module. At least some (e.g., two or more) of the cellular module 2321, WiFi module 2323, the BT module 2325, the GPS module 2327 or the NFC module 2328 may be included in one integrated chip (IC) or IC package.

The RF module 2329 may, for example, transmit and receive communication signals (e.g., RF signals). The RF module 2329 may include, for example, a transceiver, a power amplifier module (PAM), a frequency filter, a low noise amplifier (LNA), or an antenna. At least one of the cellular module 2321, the WiFi module 2323, the BT module 2325, the GPS module 2327 or the NFC module 2328 may transmit and receive RF signals through a separate RF module.

The SIM card 2324 may be an embedded SIM. The SIM card 2324 may include unique identification information (e.g., integrated circuit card identifier (ICCID)) or subscriber information (e.g., international mobile subscriber identity (IMSI)).

The memory 2330 (e.g., the memory 130) may include, for example, an internal memory 2332 or an external memory 2334. The internal memory 2332 may include at least one of, for example, a volatile memory (e.g., dynamic RAM (DRAM), static RAM (SRAM), synchronous dynamic RAM (SDRAM) or the like) or a non-volatile memory (e.g., one time programmable ROM (OTPROM), programmable ROM (PROM), erasable and programmable ROM (EPROM), electrically erasable and programmable ROM (EEPROM), mask ROM, flash ROM, flash memory (e.g., a NAND flash, a NOR flash or the like), hard drive, or solid state drive (SSD)).

The external memory 2334 may further include a flash drive, for example, compact flash (CF), secure digital (SD), micro secure digital (Micro-SD), mini secure digital (Mini-SD), extreme digital (xD), a memory stick or the like. The external memory 2334 may be functionally and/or physically connected to the electronic device 2301 through various interfaces.

The sensor module 2340 may, for example, measure the physical quantity or detect the operating status of the electronic device 2301, and convert the measured or detected information into an electrical signal. The sensor module 2340 may include at least one of, for example, a gesture sensor 2340A, a gyro sensor 2340B, a barometer 2340C, a magnetic sensor 2340D, an accelerometer 2340E, a grip sensor 2340F, a proximity sensor 2340G, a color sensor (e.g., red-green-blue (RGB) sensor) 2340H, a biosensor 2340I, a temperature/humidity sensor 2340J, an illuminance sensor 2340K, or a ultra violet (UV) sensor 2340M. Additionally or alternatively, the sensor module 2340 may include, for example, an E-nose sensor, an EMG sensor, an EEG sensor, an ECG sensor, an infrared (IR) sensor, an iris sensor and/or a fingerprint sensor. The sensor module 2340 may further include a control circuit for controlling at least one or more sensors belonging thereto. The electronic device 2301 may further include a processor configured to control the sensor module 2340, independently of or as a part of the AP 2310, thereby to control the sensor module 2340 while the AP 2310 is in a sleep state.

The input device 2350 may include, for example, a touch panel 2352, a (digital) pen sensor 2354, a key 2356, or an ultrasonic input device 2358. The touch panel 2352 may use at least one of, for example, capacitive, resistive, infrared or ultrasonic scheme. The touch panel 2352 may further include a control circuit. The touch panel 2352 may further include a tactile layer, to provide a tactile or haptic feedback to the user.

The (digital) pen sensor 2354, for example, may be a part of the touch panel 2352, or may include a separate recognition sheet. The key 2356 may include, for example, a physical button, an optical key or a keypad. The ultrasonic input device 2358 may detect ultrasonic waves in the electronic device 2301 with a microphone 2388 using an input tool generating an ultrasonic signal, to identify the data corresponding to the detected ultrasonic waves.

The display 2360 may include a panel 2362, a hologram device 2364, or a projector 2366. The panel 2362 may include a structure which is the same as or similar to that of the display 160 in FIG. 1. The panel 2362 may be implemented to be, for example, flexible, transparent or wearable. The panel 2362, together with the touch panel 2352, may be implemented as one module. The hologram device 2364 may show stereoscopic images in the air using the interference of the light. The projector 2366 may display images by projecting the light on the screen. The screen may be disposed on, for example, the inside or outside of the electronic device 2301. The display 2360 may further include a control circuit for controlling the panel 2362, the hologram device 2364, or the projector 2366.

The touch panel 2365 may include a plurality of electrodes. The plurality of electrodes may measure an electric field in the surrounding, and output an electronic signal in response to the measured electric field. The touch panel 2365 may include a transmitting electrode for transmitting an electric field and a receiving electrode for measuring the electric field. The transmitting electrode and the receiving electrode may be separately implemented by hardware. Otherwise, the transmitting electrode and the receiving electrode may be implemented in a single hardware in a time division manner.

The interface 2370 may include, for example, an HDMI 2372, a USB 2374, an optical interface 2376 or D-subminiature (D-sub) 2378. The interface 2370 may be included in, for example, the communication interface 170 shown in FIG. 1. Additionally or alternatively, the interface 2370 may include, for example, a mobile high-definition link (MHL) interface, a secure digital (SD) card/multi-media card (MMC) interface or an infrared data association (IrDA) interface.

The audio module 2380 may, for example, convert the sound and the electrical signals bi-directionally. At least some components of the audio module 2380 may be included in, for example, the I/O interface 150 shown in FIG. 1. The audio module 2380 may process the sound information that is received or output through, for example, a speaker 2382, a receiver 2384, an earphone 2386 or the microphone 2388.

The camera module 2391 is, for example, a device capable of capturing still images and videos. The camera module 2391 may include one or more image sensors (e.g., a front image sensor or a rear image sensor), a lens, an image signal processor (ISP), or a flash (e.g., an LED or xenon lamp).

The power management module 2395 may, for example, manage the power of the electronic device 2301. The power management module 2395 may include, for example, a power management integrated circuit (PMIC), a charger integrated circuit (IC), or a battery gauge. The PMIC may have wired and/or wireless charging schemes. The wireless charging scheme may include, for example, a magnetic resonance scheme, a magnetic induction scheme, or an electromagnetic scheme, and the power management module 2395 may further include additional circuits (e.g., a coil loop, a resonant circuit, a rectifier or the like) for wireless charging. The battery or fuel gauge may, for example, measure the remaining capacity, charging voltage, charging current or temperature of the battery 2396. The battery 2396 may include, for example, a rechargeable battery and/or a solar battery.

The indicator 2397 may indicate specific status (e.g., boot status, message status, charging status or the like) of the electronic device 2301 or a part (e.g. the AP 2310) thereof. The motor 2398 may convert an electrical signal into mechanical vibrations, thereby generating a vibration or haptic effect. Although not shown, the electronic device 2301 may include a processing device (e.g., GPU) for mobile TV support. The processing device for mobile TV support may process media data that is based on the standards such as, for example, digital multimedia broadcasting (DMB), digital video broadcasting (DVB) or mediaFLO™.

Each of above-described components of the electronic device 2301 may be configured with one or more components, names of which may vary depending on the type of the electronic device 2301. The electronic device 2301 may include at least one of the above-described components, some of which may be omitted, or may further include additional other components. Further, some of the components of the electronic device 2301 may be configured as one entity by being combined, thereby performing the previous functions of the components in the same manner.

At least a part of the device (e.g., modules or functions thereof) or method (e.g., operations) may be implemented by a command that is stored in a non-transitory computer-readable storage media in the form of, for example, a programming module. If the command is executed by one or more processors (e.g., the processor 120), the one or more processors may perform a function corresponding to the command. The non-transitory computer-readable storage media may be, for example, the memory 130.

The non-transitory computer-readable storage media may include magnetic media (e.g., a hard disk, a floppy disk, and magnetic tape), optical media (e.g., a compact disc read only memory (CD-ROM) and a digital versatile disc (DVD)), magneto-optical media (e.g., a floptical disk), and a hardware device (e.g., a read only memory (ROM), a random access memory (RAM) and a flash memory). The program command may include not only a machine code such as a code made by a compiler, but also a high-level language code that can be executed by the computer using an interpreter. The above-described hardware device may be configured to operate as one or more software modules to perform the operations according to various embodiments of the present disclosure, and vice versa.

A module or a program module may include at least one of the above-described components, some of which may be omitted, or may further include additional other components. Operations performed by a module, a program module or other components may be performed in a sequential, parallel, iterative or heuristic way. Some operations may be performed in a different order or omitted, or other operations may be added.

In a storage medium storing commands, the commands, when executed by at least one processor, are set to allow the at least one processor to perform at least one operation, and the at least one operation may include obtaining a measurement signal measured at each of a plurality of electrodes and determining adherence information of the electronic device based on the measurement signal.

As is apparent from the foregoing description, an aspect of various embodiments of the present disclosure may provide an electronic device for determining adherence information based on a signal measured on a touch panel and a method for controlling the same. The electronic device may measure whether the electronic device is in proper adherence to the measurement target. If it is determined that the electronic device is not in proper adherence to the measurement target, the electronic device may induce the proper adherence. Accordingly, the electronic device may measure a biological signal by being in adherence to the measurement target, thereby providing a user with valid biological signal processing results.

While the present disclosure has been shown and described with reference to certain embodiments thereof, it will be understood by those skilled in the art that various changes in form and details may be made therein without departing from the scope of the present disclosure. Therefore, the scope of the present disclosure should not be defined as being limited to the embodiments, but should be defined by the appended claims and equivalents thereof.

## Claims

1. An electronic device comprising:
a touch panel including a plurality of electrodes; and
a processor configured to obtain a measurement signal measured at each electrode of the plurality of electrodes, and determine adherence information of the electronic device based on the measurement signal.

2. The electronic device of claim 1, wherein the processor is further configured to determine a degree of an adherence between at least a portion of the electronic device and at least a portion of a measurement target based on a magnitude of the measurement signal.

3. The electronic device of claim 2, wherein the processor is further configured to determine that the electronic device is in proper adherence to the at least a portion of measurement target if a difference between a magnitude of the measurement signal and a reference value exceeds a preset threshold.

4. The electronic device of claim 2, wherein the processor is further configured to determine whether the electronic device is in proper adherence to the at least a portion of measurement target based on a measurement signal corresponding to at least one crossing point between the plurality of electrodes.

5. The electronic device of claim 4, wherein the processor is further configured to determine whether the electronic device is in proper adherence to the at least a portion of measurement target based on a number of crossing points at which a difference between a magnitude of the measurement signal and a reference value exceeds a preset threshold.

6. The electronic device of claim 2, wherein the processor is further configured to determine a contact area based on a magnitude of the measurement signal and determine whether the electronic device is in proper adherence to the at least a portion of measurement target based on the contact area.

7. The electronic device of claim 1, further comprising a pressure sensor configured to measure a pressure applied to the electronic device,
wherein the processor is further configured to determine whether the electronic device is in proper adherence to a measurement target based on the measurement signal and the measured pressure.

8. The electronic device of claim 1, wherein the processor is further configured to determine a degree of skin hydration of a user on which the electronic device is worn based on the measurement signal.

9. The electronic device of claim 8, further comprising a sensing module configured to measure a biological signal of the user on which the electronic device is worn,
wherein the processor is further configured to analyze the biological signal using the degree of skin hydration.

10. The electronic device of claim 1, further comprising a memory configured to store association information between a magnitude of the measurement signal and a measurement target,
wherein the processor is further configured to determine the measurement target based on the magnitude of the measurement signal and the stored association information.

11. The electronic device of claim 1, further comprising an additional touch panel including a plurality of additional electrodes,
wherein the processor is further configured to determine the adherence information based on a difference between measurement signals from each electrode of the plurality of electrodes and measurement signals from each electrode of the plurality of additional electrodes.

12. The electronic device of claim 1, wherein the processor is further configured to determine contact information of the electronic device based on the measurement signal, and determine a worn portion of the electronic device based on the contact information.

13. The electronic device of claim 12, wherein the contact information is at least one of a contact area of the touch panel, a contact shape on the touch panel and a three-dimensional (3D) distribution of a contact.

14. A method for controlling an electronic device comprising a touch panel including a plurality of electrodes, the method comprising:
obtaining a measurement signal measured at each electrode of the plurality of electrodes; and
determining adherence information of the electronic device based on the measurement signal.

15. The method of claim 14, wherein determining the adherence information of the electronic device comprises determining a degree of an adherence between at least a portion of the electronic device and at least a portion of a measurement target based on a magnitude of the measurement signal.
